# EUROPEAN PATENT SPECIFICATION

(11) **EP 3 191 327 B1**
(45) Date of publication and mention of the grant of the patent: **19.07.2023**
(21) Application number: 15759810.3
(22) Date of filing: 07.09.2015
(51) Int. Cl.: B60H 1/00, F24D 5/06, B60P 3/32, F24F 13/02, F24D 5/02, F24D 5/10

(54) **SPACE HEATING SYSTEM FOR VEHICLES AND PORTABLE STRUCTURES**
RAUMHEIZUNGSANLAGE FÜR FAHRZEUGE UND TRAGBARE STRUKTUREN
SYSTÈME DE CHAUFFAGE LOCAL POUR VÉHICULES ET STRUCTURES PORTABLES

(30) Priority: 10.09.2014 GB 201416028
(43) Date of publication of application: 19.07.2017
(73) Proprietor: Munster Simms Engineering Limited, Bangor, Down BT19 7TA (GB)
(72) Inventor: MCFARLAND, Stanley, Bangor Down BT19 7TA (GB)
(74) Representative: FRKelly
(86) International application number: PCT/EP2015/070409
(87) International publication number: WO 2016/037989

(56) References cited:
- DE-A1- 1 755 132
- DE-U- 6 910 683
- DE-U1-202005 017 225
- GB-A- 1 589 196
- US-A- 2 240 951
- US-A- 2 587 871

## Description

### Field of the Invention

This invention relates to spacing heating systems especially for use with vehicles and portable structures.

### Background to the Invention

Space heating systems are commonly provided in vehicles such as recreational vehicles (RVs), caravans and boats, and portable structures such as mobile homes, portable cabins. Conventionally, either one of two types of system is used: a wet heating system or a blown air system.

In a typical wet heating system the heating medium is a liquid, usually water, which is pumped around a circuit comprising the radiators and pipes. Advantages of the wet system include that it is quiet and clean, and that it provides even heating of the space as well as heating the fabric of the structure in which it is installed. Disadvantages include that it is costly, heavy and does not provide instant heat.

In a blown air system, air is heated and blown through thermally insulated ducting. The end of the ducting is open and serves as a vent through which heated air is expelled to heat the surrounding space. Advantages of the blown air system include that it is inexpensive, light, space saving and provides almost instant heat. Disadvantages include that it is noisy, disturbs dust, heats unevenly and tends not to heat the fabric of the structure in which it is installed.

German patent application DE 1755132 discloses an air heating system for a caravan comprising a radiator ducts that extend around the periphery of the internal accommodation space.

It would be desirable to provide an improved space heating system.

### Summary of the Invention

The invention provides an accommodation structure as claimed in claim 1.

At least one radiator duct has a first open end connected to a respective one of said at least one air outlets, and a second open end connected to a respective one of said at least one air inlets to form a radiator loop. Said radiator loop comprises a forward portion of the respective radiator duct extending from the respective outlet to a return point, and a return portion of the respective radiator duct extending from the return point to the respective inlet, wherein said forward and return portions run side-by-side, preferably substantially parallel with one another.

Optionally, at least one radiator duct has a first open end connected to respective one of said at least one outlets, and extends from said respective outlet, terminating at a free end. Said free end is preferably closed, or closable by means of a closable vent. In preferred embodiments at least one, preferably a plurality of, outlets are formed in said at least one radiator duct between said open end and said free end. The outlets may be mutually spaced apart in the longitudinal direction of the respective radiator duct. Typically said at least one outlet is normally open, and may comprise a closable vent.

Typically said at least one outlet is located in a distal portion of the respective radiator duct, the distal portion being separated from the respective space heater outlet by a proximal portion of the respective radiator duct. Also typically, there are no outlets, or at least no normally open outlets, in said proximal portion. Alternatively said proximal portion includes at least one outlet, but fewer than are provided in said distal portion. By way of example said distal portion may provide up to approximately 50%, preferably up to approximately 40% or up to approximately 25%, of the total length of the respective duct.

The preferred configuration of said at least one outlet is selected such that the distal portion provides, in use, substantially the same amount of heat to the surrounding environment as the proximal portion.

Typically, said at least one radiator duct is wholly or partly metallic, for example formed wholly or partly from metal. Preferably, said at least one radiator duct is flexible and/or semi-rigid.

Said at least one radiator duct is shaped and dimensioned to fit around the periphery of an accommodation space to be heated.

One or more closable vents are provided in one or more of said radiator ducts configured to form a radiator loop.

Typically the structure comprises a floor, wherein said at least one radiator duct is located above the floor, preferably substantially at floor level.

In typical embodiments, all or part of said at least one radiator duct is located behind and/or beneath one or more fixtures or fittings provided in the structure.

Preferably one or more apertures are provided in or around said fixtures or fittings to allow air to circulate around said fixtures or fittings by convection caused, in use, by heat radiating from said at least one radiator duct.

Said accommodation space typically comprises a plurality of accommodation zones, wherein a respective one or more of said radiator ducts extends around the periphery of each zone. Each zone may comprise one or more accommodation areas, for example any one or more of a living area, dining area, kitchen, washroom, toilet, shower room and/or bedroom. In typical embodiments, said accommodation structure is part of a vehicle or mobile or temporary structure.

### Brief Description of the Drawings

An embodiment of the invention is now described by way of example and with reference to the accompanying drawings in which:
Figure 1 is a plan view of a caravan in which a space heating system embodying one aspect of the invention is installed; and
Figure 2 is a schematic diagram of a space heater suitable for use with the space heating system of Figure 1.

### Detailed Description of the Drawings

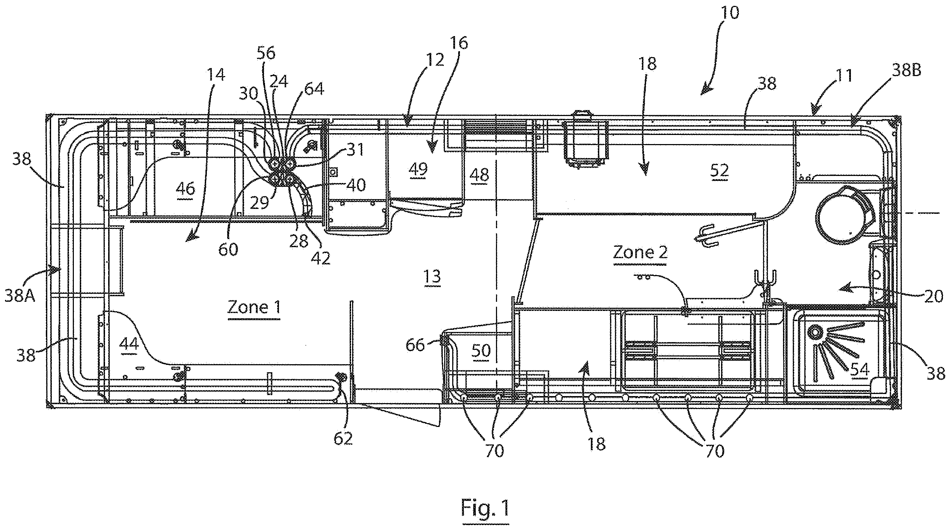

Referring now to Figure 1 of the drawings there is shown, generally indicated as 10, a plan view of a caravan in which there is installed a space heating system 12 embodying one aspect of the invention. It is noted that the invention is not limited to use with caravans and may be used with any structure that is shaped and dimensioned to define an internal accommodation space that requires heating. Embodiments of the invention are however particularly suited for use with vehicles, such as RVs (also known as camper vans or camping cars), caravans and boats, or with temporary or portable accommodation structures such as mobile homes or portable cabins.

The caravan 10 has an accommodation structure 11, or cabin, that defines an internal accommodation space that may be said to comprise accommodation zones. In the illustrated example, Zone 1 comprises a living area 14 and Zone 2 comprises a kitchen 16, bedrooms 18 and a washroom 20. More generally, the accommodation space may comprise one or more zones, each zone comprising one or more accommodation areas, e.g. any one or more of a living area, dining area, kitchen, washroom, toilet, shower room and/or bedroom.

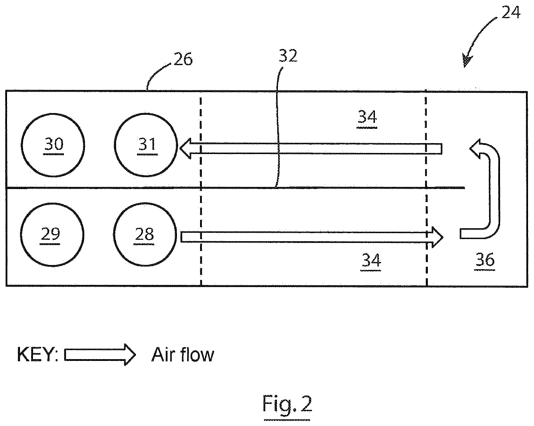

A space heating system 22 embodying the invention is installed in the caravan 10. The space heating system 22 comprises a space heater 24 of a type that heats a gaseous heating medium, usually air. Such heaters are commonly known as blown air space heaters. Figure 2 shows an exemplary space heater 24 comprising a body 26 having inlets 28, 29 and outlets 30, 31. Internally, the body 26 is configured, in this case by an internal divider 32, to provide a fluid flow path from the inlets 28, 29 to the outlets 30, 31. At least one heating device 34 is provided inside the body between the inlets 28, 29 and outlets 30, 31 for heating the air as it travels along the fluid flow path. In this example, the heater 24 includes two heating devices 34, which may be of different types, e.g. an electric heater and a gas powered heater. The heater 24 includes a fan 36 that acts to draw air into the body 26 through the inlets 28, 29 and expel heated air from the outlets 30, 31. The fan 36 may be located inside the body 26, for example in the fluid flow path as shown, and may comprise an impellor type fan. The space heater 24 typically includes a controller (not shown) which automatically controls the operation of the heating device(s) 34 and/or the fan 36, as required, in response to the temperature measured at the inlets 28, 29 and/or outlets 30 31 by one or more temperature sensors (not shown). It will be understood that the space heater 24 may take alternative configurations to that illustrated. For example the number of inlet(s) and/or outlet(s), and/or the number and/or type of heating device may be selected to suit the application.

The system 22 further comprises one or more heat radiating ducts 38 connected to one or more of the inlets 28, 29 and outlets 30, 31 of the space heater 24. At least part of, and optionally all of, each duct 38 is formed from a thermally conductive material, i.e. a material with a relatively high thermal conductivity (as distinct from a thermally insulating material, which has a relatively low thermal conductivity). For example, each duct 38 may be wholly or partly formed from a metallic or metalized material, e.g. formed from aluminium or other metal. Flexible and/or semi-rigid ducting is preferred, e.g. foil ducting. As a result, each duct 38 acts as a thermal radiator during use, i.e. transferring heat from the air inside the duct 38 to the space surrounding the exterior of the duct 38. Conveniently, each duct 38 is formed from the same material along its whole length. Alternatively, however, one or more longitudinal sections of one or more of the ducts 38 may be formed from a different material, for example a thermally insulating material, and/or may be lagged with a thermally insulating material.

The space heater 24, or at least its body 26, may be installed above or below the floor 13 of the accommodation structure 11 as is convenient. In cases where the body 26 is located beneath the floor 13, each duct 38 may pass through an aperture (not illustrated) provided in the floor (or elsewhere in the structure 11) for this purpose. Optionally a respective sleeve-like connector (not shown) may be connected to one or more of the inlets 28, 29 and outlets 30, 31, in which case the connector may extend through the aperture.

An inlet duct 40 is connected to one of the inlets 28 for drawing air into the system 22 from its external environment. The inlet duct 40 has an open end 42 through which air may be drawn from the environment into the heater 24 via the duct 40 and inlet 28. The open end 42 may be located inside the structure 11 (as illustrated), or outside of the structure 11, above the floor 13 or below the floor 13, as is convenient, the duct 40 passing through the floor 13 or not, as required.

In preferred embodiments, the radiating ducts 38 are located around the periphery of the structure 11. The ducts 38 are conveniently located above the floor 13, preferably substantially at floor level. Alternatively, the ducts 38 may be located beneath the floor 13 (or at least beneath floor level), with apertures provided in the floor 13 (or elsewhere in the structure 11) to allow radiated heat into the accommodation space.

Typically, all or part of the or each duct 38 is located behind and/or beneath one or more of the fixtures or fittings in the structure 11, for example a sofa 44, table 46, work surface 48, appliance 49, cupboard 50, bed 52 or shower cubicle 54. One or more apertures (not shown) may be provided to allow air heated by each duct 38 reach the accommodation space and not to be trapped by the relevant fixture or fitting. For example, one or more apertures, e.g. gaps, may be provided in the relevant fixture(s) or fitting(s) at floor level, and/or one or more apertures, e.g. gaps, may be provided in the relevant fixture(s) or fitting(s) at the relevant internal wall(s) of the structure 11. This allows air to circulate around the relevant fixture(s) or fitting(s) by convection caused by the heat radiating from the duct 38. In any event, each duct 38 (or at least as much of it as possible or desired) is exposed to the accommodation space along its length to facilitate its use as a radiator.

In Figure 1, duct 38A forms a radiator loop between outlet 30 and inlet 29. The duct 38A has first and second open ends 56, 60 connected respectively to the outlet 30 and inlet 29, which are typically located adjacent one another. The loop includes a return point 62, a forward portion of the duct 38A extending from the outlet 30 to the return point 62, and a return portion of the duct 38 extending from the return point 62 to the inlet 29. The forward and return portions of the duct 38A run side-by-side, preferably substantially parallel with one another. As a result, both the forward and return portions of the duct 38A may conform substantially to the shape of the relevant part of the internal periphery of the structure 11.

In use, hot air is blown from the heater 24 via the outlet 30 and around the loop, returning to the heater 24 via inlet 29. By locating the forward and return portions of the duct 38A adjacent one another the amount of heat radiated in use from the duct 38A in the desired region, i.e. around the periphery of Zone 1 of the accommodation space, is increased compared to a single length of duct.

Alternatively, the or each duct 38 may extend from one of the outlets 30, 31 and terminate at a free end, i.e. an end that is not connected to one of the inlets. In Figure 1, duct 38B has one open end 64 connected to outlet 31 and a free end 66. The free end 66 may be closed, or closable by means of a closable vent (not shown). The duct 38B extends around the periphery of the structure 11, in particular around the periphery of Zone 2. At least one, but typically a plurality of, outlets 70 are formed in the duct 38B between its ends 64, 66. Each outlet 70 may conveniently be provided by forming a respective aperture though the body of the duct 38B. Typically, the outlets 70 are mutually spaced apart in the longitudinal direction of the duct 38B. Preferably, the outlets 70 are positioned on the duct 38B so as to face outwardly from the periphery of the structure 11 and/or upwardly from the floor 13. Optionally, any one or more of the outlets 70 may comprise a closable vent (not shown), although it is preferred that the outlets 70 are normally open.

The outlets 70 are located in a distal portion of the duct 38B, the distal portion being separated from the outlet 31 of the heater 24 by a proximal portion of the duct 38B. In preferred embodiments there are no outlets 70, or at least no normally open outlets, in the proximal portion of the duct 38B. In some embodiments, the proximal portion of the duct 38B may include one or more outlets 70, but in any event fewer than are provided in the distal portion of the duct 38B, assuming the outlets are of the same size otherwise of a lower cumulative cross section area. By way of example, the distal portion accounts for up to approximately 50% of the total length of the duct 38B, although more typically it accounts for up to approximately 40%, or up to approximately 25%, of the total length of the duct 38B. This is because if normally open outlets are provided too close to the space heater outlet, insufficient heated air will reach the free end of the duct 38B.

In use, because the proximal portion of the duct 38B is located closer to the space heater 24 than the distal portion, the air flowing through the proximal portion is hotter than the air that reaches the distal portion and, as such, the proximal portion radiates more heat (per unit area) than the distal portion. The outlets 70 compensate for the relatively poor radiation performance of the distal portion by allowing hot air to be blown out of the duct 38B to supplement the radiant heat provided by the distal portion. In preferred embodiments, the configuration of the outlets 70 may be selected such that the distal portion provides substantially the same amount of heat to the surrounding environment as the proximal portion. Alternatively, the configuration of the outlets 70 may be selected to provide a relatively increased or decreased heat output by the proximal portion or one or more respective subsections thereof. Selecting the configuration of the outlets 70 may involve selecting any one or more of the size, shape, location and/or spacing of the outlets 70. It will be apparent that the outlets 70 must be sufficiently large to allow air flow through at a sufficient rate and in a sufficient amount to appreciably supplement the radiant heat while not preventing sufficient hot air from reaching the free end of the duct. Typically, the outlets have a diameter of approximately 5 mm to approximately 50 mm.

One or more closable vents (not shown) are provided in one or more of the ducts 38, particularly in a duct 38 that is configured to form a loop such as duct 38A. The, or each vent, is preferably provided in the body of the duct between the duct ends and, where there is more than one vent, they may be spaced apart along the length of the duct. The or each vent may be opened or closed, preferably independently of each other but optionally in unison. The vent(s) may be operated manually or by an automated opening/closing device as desired. When the vent(s) are open, the system 22 acts as a blown air system in the vicinity of the open vent(s) and this increases the speed at which the surrounding space is heated.

Preferred systems embodying the invention offer advantages normally associated with wet systems, i.e. being relatively quiet and clean, and providing even heating of the space as well as heating the fabric of the structure, avoiding the disadvantages cost, weight and latency.

The invention is not limited to the embodiment(s) described herein but can be amended or modified without departing from the scope of the present invention as defined in the appended claims.

## Claims

1. An accommodation structure (11) comprising an internal accommodation space and a space heating system (22), the space heating system comprising:
a space heater (24) having at least one air inlet (28, 29) and at least one air outlet (30, 31); and
at least one radiator duct (38, 38A),
wherein at least part of said at least one duct is formed from thermally conductive material such that it acts, in use, as a heat radiator,
**characterized in that** at least one of said at least one radiator ducts (38A) has a first open end (56) connected to a respective one of said at least one outlets, and a second open end (60) connected to a respective one of said at least one air inlets to form a radiator loop,
said radiator loop comprising a forward portion of the respective radiator duct (38A) extending from the respective outlet (30) to a return point (62), and a return portion of the respective radiator duct (38A) extending from the return point to the respective inlet (29), wherein said forward and return portions run side-by-side,
wherein said radiator loop is shaped and dimensioned to fit around the periphery of said accommodation space,
and wherein one or more closable vents are provided in the or each duct that is configured to form said radiator loop.

2. The structure of claim 1, wherein said at least one radiator duct (38, 38A) is wholly or partly metallic.

3. The structure of claim 1 or 2, wherein said at least one radiator duct (38, 38A) is flexible and/or semi-rigid.

4. The structure of any preceding claim, comprising a floor (13), wherein said radiator loop is located above the floor.

5. The structure of any preceding claim, wherein all or part of said radiator loop is located behind and/or beneath one or more fixtures or fittings (44, 46, 48, 49, 50, 52, 54) provided in the structure (11).

6. The structure of claim 5, wherein one or more apertures are provided in or around said fixtures or fittings (44, 46, 48, 49, 50, 52, 54) to allow air to circulate around said fixtures or fittings by convection caused, in use, by heat radiating from said radiator loop.

7. The structure of any preceding claim, wherein said accommodation structure (11) is part of a vehicle or mobile or temporary structure (10).

8. The structure of any preceding claim, wherein said one or more closable vents comprises a plurality of vents provided in the body of the radiator duct (38, 38A) between the first and second ends (56, 60), and being spaced apart along the length of the duct.

9. The structure of any preceding claim, wherein said accommodation space comprises a plurality of accommodation zones, wherein a respective one or more of said radiator ducts (38) extends around the periphery of each zone.

## Patentansprüche

1. Unterkunftsstruktur (11), umfassend einen inneren Unterkunftsraum und eine Raumheizungsanlage (22), wobei die Raumheizungsanlage Folgendes umfasst:
eine Raumheizvorrichtung (24), die mindestens einen Lufteinlass (28, 29) und mindestens einen Luftauslass (30, 31) aufweist; und
mindestens einen Radiatorkanal (38, 38A),
wobei mindestens ein Teil des mindestens einen Kanals aus wärmeleitendem Material gebildet ist, sodass er im Gebrauch als Wärmeradiator wirkt,
**dadurch gekennzeichnet, dass** mindestens einer der mindestens einen Radiatorkanäle (38A) ein erstes offenes Ende (56), das mit einem jeweiligen der mindestens einen Auslässe verbunden ist, und ein zweites offenes Ende (60) aufweist, das mit einem jeweiligen der mindestens einen Luftauslässe verbunden ist, um einen Radiatorkreislauf zu bilden,
wobei der Radiatorkreislauf einen Vorwärtsabschnitt des jeweiligen Radiatorkanals (38A), der sich von dem jeweiligen Auslass (30) zu einem Rückführpunkt (62) erstreckt, und einen Rückführabschnitt des jeweiligen Radiatorkanals (38A), der sich von dem Rückführpunkt zu dem jeweiligen Einlass (29) erstreckt, umfasst, wobei der Vorwärts- und der Rückführabschnitt nebeneinander verlaufen,
wobei der Radiatorkreislauf so geformt und dimensioniert ist, dass er um den Umfang des Unterkunftsraums passt,
und wobei eine oder mehrere verschließbare Entlüftungen in dem oder jedem Kanal bereitgestellt sind, der dazu konfiguriert ist, den Radiatorkreislauf zu bilden.

2. Struktur nach Anspruch 1, wobei der mindestens eine Radiatorkanal (38, 38A) ganz oder teilweise metallisch ist.

3. Struktur nach Anspruch 1 oder 2, wobei der mindestens eine Radiatorkanal (38, 38A) flexibel und/oder halbstarr ist.

4. Struktur nach einem der vorhergehenden Ansprüche, umfassend einen Boden (13), wobei der Radiatorkreislauf über dem Boden angeordnet ist.

5. Struktur nach einem der vorhergehenden Ansprüche, wobei der gesamte oder ein Teil des Radiatorkreislaufs hinter und/oder unter einem oder mehreren Einbau- oder Einrichtungsgenständen (44, 46, 48, 49, 50, 52, 54) angeordnet ist, die in der Struktur (11) bereitgestellt sind.

6. Struktur nach Anspruch 5, wobei eine oder mehrere Öffnungen in oder um die Einbau- oder Einrichtungsgenstände (44, 46, 48, 49, 50, 52, 54) bereitgestellt sind, um zu ermöglichen, dass Luft um die Einbau- oder Einrichtungsgenstände durch Konvektion zirkuliert, die im Gebrauch durch Wärme, die von dem Radiatorkreislauf abgestrahlt wird, verursacht wird.

7. Struktur nach einem der vorhergehenden Ansprüche, wobei die Unterkunftsstruktur (11) Teil eines Fahrzeugs oder einer mobilen oder temporären Struktur (10) ist.

8. Struktur nach einem der vorhergehenden Ansprüche, wobei die eine oder die mehreren verschließbaren Entlüftungen eine Vielzahl von Entlüftungen umfassen, die in dem Körper des Radiatorkanals (38, 38A) zwischen dem ersten und dem zweiten Ende (56, 60) bereitgestellt und entlang der Länge des Kanals voneinander beabstandet ist.

9. Struktur nach einem der vorhergehenden Ansprüche, wobei der Unterkunftsraum eine Vielzahl von Unterkunftszonen umfasst, wobei sich ein jeweiliger einer oder mehrere der Radiatorkanäle (38) um den Umfang jeder Zone erstrecken.

## Revendications

1. Structure de logement (11) comprenant un espace de logement interne et un système de chauffage local (22), le système de chauffage local comprenant :
un dispositif de chauffage local (24) ayant au moins une entrée d'air (28, 29) et au moins une sortie d'air (30, 31) ; et
au moins un conduit de radiateur (38, 38A),
dans laquelle au moins une partie dudit au moins un conduit est formée d'un matériau thermiquement conducteur de sorte qu'il agit, en utilisation, comme un radiateur thermique,
**caractérisée en ce qu'**au moins l'un desdits au moins un conduit de radiateur (38A) a une première extrémité ouverte (56) connectée à l'une respective desdites au moins une sortie, et une seconde extrémité ouverte (60) connectée à l'une respective desdites au moins une entrée d'air pour former une boucle de radiateur,
ladite boucle de radiateur comprenant une partie avant du conduit de radiateur respectif (38A) s'étendant de la sortie respective (30) à un point de retour (62), et une partie de retour du conduit de radiateur respectif (38A) s'étendant du point de retour à l'entrée respective (29), dans laquelle lesdites parties avant et retour s'étendent côte à côte,
dans laquelle ladite boucle de radiateur est formée et dimensionnée pour s'ajuster autour de la périphérie dudit espace de logement,
et dans laquelle un ou plusieurs évents pouvant être fermés sont prévus dans le ou chaque conduit qui est configuré pour former ladite boucle de radiateur.

2. Structure selon la revendication 1, dans laquelle ledit au moins un conduit de radiateur (38, 38A) est totalement ou partiellement métallique.

3. Structure selon la revendication 1 ou 2, dans laquelle ledit au moins un conduit de radiateur (38, 38A) est flexible et/ou semi-rigide.

4. Structure selon une quelconque revendication précédente, comprenant un plancher (13), dans laquelle ladite boucle de radiateur est située au-dessus du plancher.

5. Structure selon une quelconque revendication précédente, dans laquelle tout ou partie de ladite boucle de radiateur est située derrière et/ou sous une ou plusieurs fixations ou un ou plusieurs raccords (44, 46, 48, 49, 50, 52, 54) prévus dans la structure (11).

6. Structure selon la revendication 5, dans laquelle une ou plusieurs ouvertures sont prévues dans ou autour desdites fixations ou raccords (44, 46, 48, 49, 50, 52, 54) pour permettre à l'air de circuler autour desdites fixations ou raccords par convection provoquée, en cours d'utilisation, par rayonnement de chaleur à partir de ladite boucle de radiateur.

7. Structure selon une quelconque revendication précédente, dans laquelle ladite structure de logement (11) fait partie d'un véhicule ou d'une structure mobile ou temporaire (10).

8. Structure selon une quelconque revendication précédente, dans laquelle lesdits un ou plusieurs évents pouvant être fermés comprennent une pluralité d'évents prévus dans le corps du conduit de radiateur (38, 38A) entre les première et seconde extrémités (56, 60), et étant espacés sur toute la longueur du conduit.

9. Structure selon une quelconque revendication précédente, dans laquelle ledit espace de logement comprend une pluralité de zones de logement, dans laquelle un ou plusieurs desdits conduits de radiateur (38) s'étendent autour de la périphérie de chaque zone.
